# EUROPEAN PATENT APPLICATION

(11) **EP 2 874 392 A1**
(43) Date of publication of application: **20.05.2015**
(21) Application number: 13860641.3
(22) Date of filing: 06.11.2013
(51) Int. Cl.: H04N 7/14

(54) **VIDEO COMMUNICATION METHOD AND APPARATUS**

(30) Priority: 06.12.2012 CN 201210521772
(71) Applicant: Xiaomi Inc., Beijing 100085 (CN)
(72) Inventor: LIN, Xingsheng, Beijing 100085 (CN)
(74) Representative: Hanna, Peter William Derek
(86) International application number: PCT/CN2013/086648
(87) International publication number: WO 2014/086223

(57) **Abstract**

Disclosed are a video communication method and apparatus. The method comprises: acquiring configuration information of a terminal with whom the video communication is performed; selecting, according to the configuration information, the corresponding camera resolution as the resolution used to collect the video; and collecting the video according to the resolution used to collect the video and sending the video to the object terminal. With the video communication method and apparatus according to the embodiments of the present invention, the resolution used by the local camera to collect the video is automatically matched according to the configuration information of the object terminal, and the object terminal does not need to perform unidirectional tension or compression, or clipping on the received video, thereby avoiding the veracity reduction of the picture and improving user experience.

## Description

The present application is based and claims priority to Chinese Patent Application No. CN201210521772.0, filed on December 6, 2012, the entire contents of which are incorporated herein by reference.

### TECHNICAL FIELD

The present disclosure generally refers to the technical field of multimedia communication technique, and more particular, to the technical field of video communication technique. Specially, the present disclosure refers to a method and device for video communication.

### BACKGROUND

With the development of the internet technique and the multimedia technique, mobile terminals have more and more plentiful functions, and increasingly powerful abilities of data processing and transmission. Nowadays, some of the mobile terminals already have the function of video communication. Some video communication softs are appeared, and users begin to pay attention to the video communication function of the mobile terminals.

In real life, the mobile terminals used by users are not the same in general. That is, users may use different mobile terminals with different brands and types. However, different mobile terminals may have different screen resolutions and different resolutions of camera-captured image.

When two users use different mobile terminals to perform video communication, in order to display the video communication content in a full-screen form, the mobile terminals need to perform drawing, compressing or cutting process on the received video communication content such that the processed video communication content can be display on the screen in a full-screen form. However, such processing to the video communication content may reduce authenticity of image and thus to affect the user experience.

### SUMMARY

In order to overcome the defect that the image authenticity degrades in video communication in prior art, the present disclosure provides a method and device for video communication.

In one aspect, the present disclosure provides a video communication method, which includes: configuration information of an object terminal in video communication is obtained; a corresponding camera resolution is selected as a resolution for capturing video according to the configuration information; a video is captured according to the resolution for capturing video and the captured video is sent to the object terminal.

In another aspect, the present disclosure provides a video communication device, which includes: an configuration information obtaining unit configured to obtain configuration information of an object terminal in video communication; a resolution selecting unit configured to select a corresponding camera resolution as a resolution for capturing video according to the configuration information; a video processing unit configured to capture a video according to the resolution for capturing video and sending the captured video to the object terminal.

According to the method and device for video communication provided by the embodiment of the present disclosure, the resolution for capturing video by local camera can be automatically matched according to the configuration of the object terminal, and it is no need for the object terminal to perform single-direction drawing, compressing or cutting process on the received video so that the authenticity of the image is prevented from degrading and the user's experience is improved.

It should be understood that, above general description and the detailed description thereafter is only illustrative, and should not be considered as limitation to the present disclosure.

### BRIEF DESCRIPTION OF THE DRAWINGS

The drawings intend to provide further comprehension of the present disclosure, and to form a part of the present application, and do not limit the present application. In the drawings:
Figure 1 is an example flowchart showing a video communication method according to an embodiment of the present disclosure.
Figure 2 is an example flowchart showing a video communication method according to an embodiment of the present disclosure.
Figure 3 is an example flowchart showing step S204 according to an embodiment of the present disclosure.
Figure 4 is an example block diagram showing a video communication device according to an embodiment of the present disclosure.
Figure 5 is an example block diagram showing a configuration information obtaining unit 401 according to an embodiment of the present disclosure.
Figure 6 is an example block diagram showing a video processing unit 403 according to an embodiment of the present disclosure.

The embodiments of the present disclosure, which will be described in detail, have been illustrated by reference to those drawings. These drawings and literal description is not for the purpose of limiting the scope of conception of the present disclosure in any manner, but for the purpose of illustrating the concept of the present disclosure for those skilled in the art, by means of specific embodiments.

### DETAILED DESCRIPTION

In order to make the objects, technical solutions and advantages of the present disclosure more clear, detailed description will be made to the present disclosure, by means of the embodiments and figures. Here, the illustrative embodiments and the illustration thereof of the present disclosure are used for explanation of the present disclosure, and should not be considered as limitation to the present disclosure.

The embodiment of the present disclosure provides a method and device for video communication. Hereinafter, the present disclosure will be illustrated in detail in combination with the drawings.

### Example 1

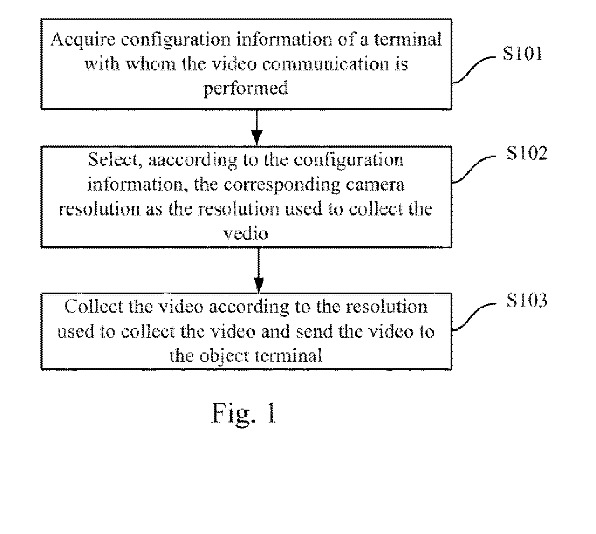

Figure 1 is an example flowchart of a video communication method according to an embodiment of the present disclosure. As shown in Fig.1, the method includes following steps.

At step S101, configuration information of an object terminal in video communication is obtained.

In the embodiment of the present disclosure, a first user using a mobile terminal A needs to make video communication with a second user using a mobile terminal B, the first and second users obtain configuration information of each other before starting the video communication between the mobile terminal A and the mobile terminal B. The configuration information may include display resolution information of the object terminal and data processing ability information of the object terminal. The display resolution information of the object terminal may include a screen resolution of the object terminal and a resolution of a video conversation window of the object terminal, and the data processing ability information of the object terminal may include the frequency of the CPU, the size of memory, and the model of the graphic processing chip of the object terminal.

At step S102, a corresponding camera resolution is selected as a resolution for capturing video according to the configuration information.

In the embodiment of the present disclosure, each of the mobile terminal A and the mobile terminal B selects a corresponding camera resolution, from the resolutions supported by a camera thereof, as the resolution for capturing video according to the configuration information of the object mobile terminal.

In the embodiment of the present disclosure, if the configuration information is the display resolution information of the object terminal, the mobile terminal make the resolution for capturing video by a local camera be matched with the display resolution of the object terminal. The mobile terminal may make the resolution for capturing video by the local camera be the same as the display resolution of the object terminal. If the local camera does not support the display resolution of the object terminal, the mobile terminal may make an aspect ratio of the resolution for capturing video by the local camera be the same as an aspect ratio of the display resolution of the object terminal. If the local camera does not support the aspect ratio of the display resolution of the object terminal, the mobile terminal may select a resolution that has a minimum difference in aspect ratio from the display resolution of the object terminal, from the resolutions supported by the local camera, as the resolution for capturing video.

In the embodiment of the present disclosure, if the configuration information is the data processing ability information of the object terminal, the mobile terminal may select a corresponding camera resolution as the resolution for capturing video according to the data processing ability of the object terminal. If the data processing ability of the object terminal is relatively good, a relatively high camera resolution may be selected as the resolution for capturing video. If the data processing ability of the object terminal is relatively poor, a relatively low camera resolution may be selected as the resolution for capturing video.

In the embodiment of the present disclosure, a corresponding camera resolution can be selected as the resolution for capturing video according to both of the display resolution information and the data processing ability information of the object terminal. Firstly, a set of appropriate camera resolutions can be selected according to the display resolution information of the object terminal, and then a camera resolution can be selected from the set of appropriate camera resolutions as the resolution for capturing video according to the data processing ability information of the object terminal. In another embodiment of the present disclosure, the mobile terminal also can select a set of appropriate camera resolutions according to the data processing ability information of the object terminal firstly, and then select a camera resolution from the set of appropriate camera resolutions as the resolution for capturing video according to the display resolution information of the object terminal.

At step S103, the video is captured according to the resolution for capturing video and sent to the object terminal.

In the embodiment of the present disclosure, the mobile terminals A and B captures video according to the resolution for capturing video respectively and send the captured video to the object terminal.

According to the video communication method provided by the embodiment of the present disclosure, the resolution for capturing video by local camera can be automatically matched according to the configuration of the object terminal, and it is no need for the object terminal to perform single-direction drawing, compressing or cutting process on the received video so that the authenticity of the image is prevented from degrading and the user's experience is improved.

The video communication method provided by the embodiment of the present disclosure is not limited to the mobile terminals, but is suitable for other video terminal devices such as PC, notebook, multimedia TV and so on.

### Example 2

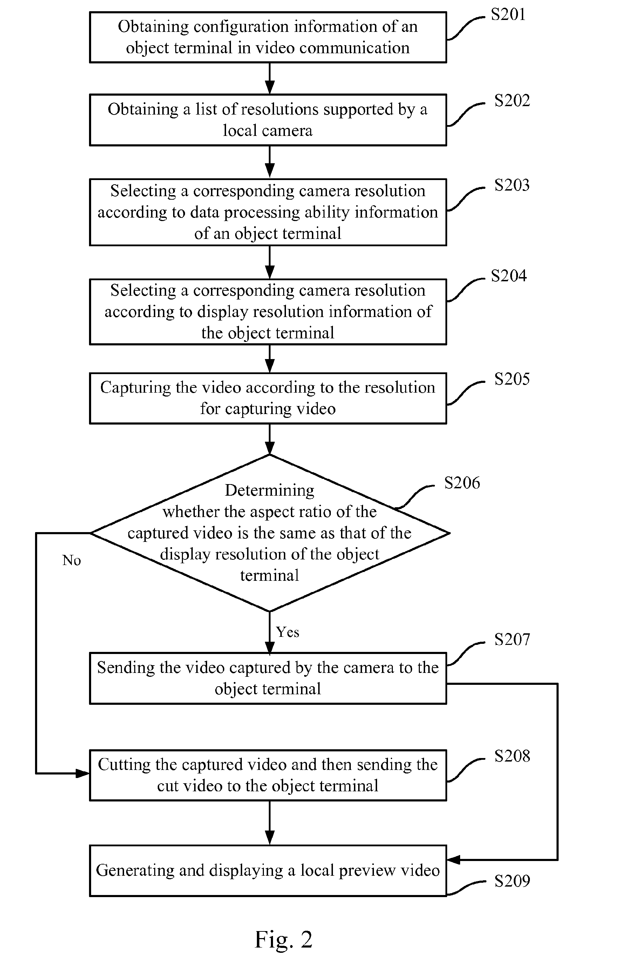

Figure 2 is an example flowchart of a video communication method according to an embodiment of the present disclosure. As shown in Fig.2, the method includes following steps.

At step S201, configuration information of a video communication object terminal is obtained.

In the embodiment of the present disclosure, a first user using a mobile terminal A make video communication with a second user using a mobile terminal B. The screen resolution of the mobile terminal A is 1280×720 with an aspect ratio of 16:9, and the screen resolution of the mobile terminal B is 800×480 with an aspect ratio of 5:3.

In the embodiment of the present disclosure, before starting the video communication between the mobile terminal A and the mobile terminal B, the mobile terminal A and the mobile terminal B obtain configuration information of each other. In another embodiment of the present disclosure, the mobile terminals can perform step S201 after initiating the video communication, that is, the mobile terminals can obtain configuration information of each other at any time and in real time, and adjust the resolution for capturing video in real time according to the configuration information.

At step S202, a list of resolutions supported by the local camera is obtained.

In the embodiment of the present disclosure, the resolutions obtained by the mobile terminal A and supported by a camera thereof are listed in table 1 as below.

**Table 1**

| Camera resolution | Resolution aspect ration |
|---|---|
| 1920×1080 | 16:9 |
| 1280×768 | 5:3 |
| 1280×720 | 16:9 |
| 1024×768 | 4:3 |
| 960×600 | 16:10 |
| 800×600 | 4:3 |
| 800×480 | 5:3 |
| 640×480 | 4:3 |
| 320×240 | 4:3 |
| 200×200 | 1:1 |

At step S203, a corresponding camera resolution is selected according to the data processing ability information of the object terminal.

In the embodiment of the present disclosure, the mobile terminal A can select a set of corresponding resolutions according to the performance of the CPU of the mobile terminal B. If the CPU of the mobile terminal B is a 1.5GHz dual-core processor or higher, the mobile terminal A can select a set of high resolutions as the resolutions for capturing video. If the CPU of the mobile terminal B is a 1.5GHz dual-core processor or lower but higher than 1 GHz single-core processor, the mobile terminal A can select a set of middle resolutions as the resolutions for capturing video. If the CPU of the mobile terminal B is a 1 GHz single-core processor or lower, the mobile terminal A can select a set of low resolutions as the resolutions for capturing video. In another embodiment of the present disclosure, the resolution can also be classed into two or more sets according to the performance of the CPU of the mobile terminal B, the purpose of which is to make the resolution for transmitting the video comply with the process ability of the mobile terminal B so as to make the mobile terminal B be able to perform the video communication fluently.

In the embodiment of the present disclosure, the set of high resolutions includes 1920×1080, 1280×768 and 1280×720, the set of middle resolutions includes 1024×768, 960×600, 800×600, 800×480 and 640×480, the set of low resolutions includes 320×240 and 200×200. In another embodiment of the present disclosure, other sets can be used to make the process ability of the mobile terminal B sufficient to process the video in corresponding sets, such as to class 1024×768 into the set of high resolutions, or class 640×480 into the set of low resolutions. It is understood that above contents should not be interpreted as limitation to classing principle.

In another embodiment of the present disclosure, the mobile terminal A can determine the data processing ability and select corresponding set of resolution according to the performance of the CPU, the memory, and the graphic processing chip.

At step S204, a corresponding camera resolution is selected according to the display resolution information.

In the embodiment of the present disclosure, after obtaining a set of resolutions in the step S203, the mobile terminal A selects a camera resolution, which has the minimum difference on aspect ratio from that of the display resolution of the mobile terminal B, from the obtained resolutions as the resolution for capturing video. If the mobile terminal B uses a full screen for video communication, the display resolution information may be the resolution of the screen. If the mobile terminal B uses a window for video communication, the display resolution information cmay be the resolution of the window for video communication.

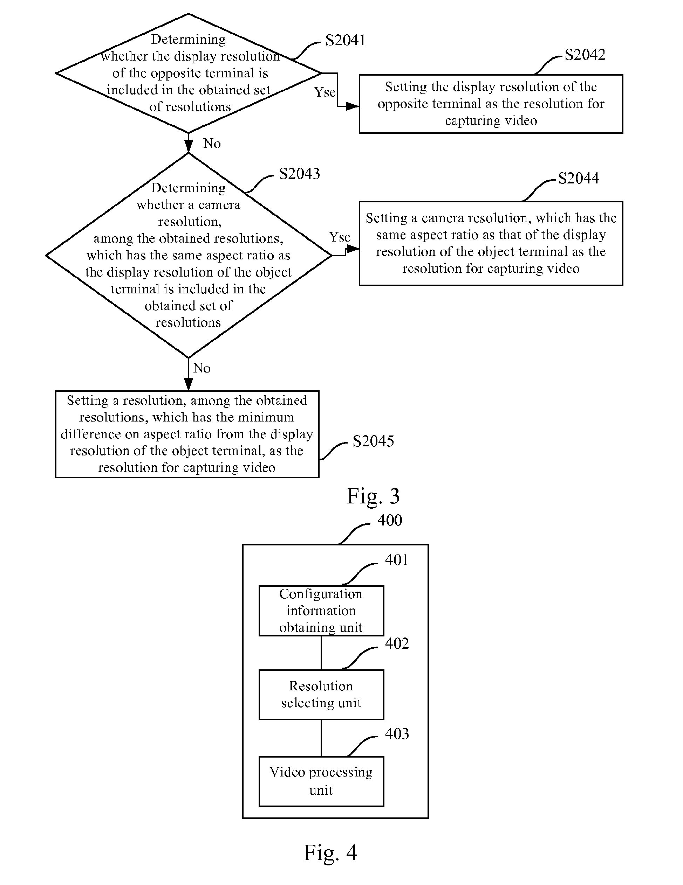

Figure 3 is an example flowchart of a step S204 according to an embodiment of the present disclosure. As shown in Fig.3, S204 may include following steps.

At step S2041, it is determined whether the display resolution of the object terminal is included in the obtained set of resolutions. If the display resolution of the object terminal is included, the method proceeds to the step S2042 in which the display resolution of the object terminal is set as the resolution for capturing video. If the display resolution of the object terminal is not included, the method proceeds to step S2043.

In the embodiment of the present disclosure, if the CPU of the mobile terminal is a 1.3GHz dual-core processor, in step S203 the mobile terminal A will obtain a set of middle resolution, since the set of middle resolution includes the display resolution 800×480 of the mobile terminal B, then the method proceeds to step S2042.

At step S2042, the display resolution of the object terminal is set as the resolution for capturing video.

In the embodiment of the present disclosure, the mobile terminal A sets 800×480 as the resolution for capturing video.

At step S2043, is determined whether a camera resolution, which has the same aspect ratio as that of the display resolution of the object terminal, is included in the obtained set of resolutions. If a camera resolution having the same aspect ratio as the display resolution of the object terminal is included, the method proceeds to the step S2044 in which a camera resolution that has the same aspect ratio as that of the display resolution of the object terminal is set as the resolution for capturing video. If a camera resolution that having the same aspect ratio as the display resolution of the object terminal is not included, the method proceeds to step S2045.

At step S2044, a camera resolution having the same aspect ratio as that of the display resolution of the object terminal is set as the resolution for capturing video.

In the embodiment of the present disclosure, if the display resolution of the mobile terminal B is 1280×768 with an aspect ratio of 5:3, and the mobile terminal A determines that the aspect ratio of 800×480 in the set of middle resolution is 5:3, the mobile terminal A set 800×480 as the resolution for capturing video.

At step S2045, a resolution having the minimum difference on aspect ratio from the that of display resolution of the object terminal is set as the resolution for capturing video.

In the embodiment of the present disclosure, if the display resolution of the mobile terminal B is 800×800, and the mobile terminal A determines that no camera resolution in the set of middle resolution is identical to the display resolution of the mobile terminal B. At this time, the mobile terminal can set a camera resolution, which is closest to the aspect ratio 1:1 of the resolution 800×800 in the set of middle resolution, as the resolution for capturing video. In the embodiment of the present disclosure, the ratio closest to 1:1 is 4:3 which corresponding to resolutions 1024×768, 800×600 and 640×480. The mobile terminal can choose any one of them as the resolution for capturing video, or choose the largest of them as the resolution for capturing video.

At step S205, the video is captured according to the resolution for capturing video.

At step S206, it is determined whether the aspect ratio of the captured video is the same as that of the display resolution of the object terminal.

In the embodiment of the present disclosure, if the aspect ratio of the video captured by the mobile terminal A is the same as that of the display resolution of the mobile terminal B, the method proceeds to step S207. If the aspect ratio of the video captured by the mobile terminal A is different from that of the display resolution of the mobile terminal B, the method proceeds to step S208.

At step S207, the video captured by the camera is sent to the object terminal.

At step S208, the captured video is sent to the object terminal after being cutting.

In the embodiment of the present disclosure, if the aspect ratio of the video captured by the mobile terminal A is different from that of the display resolution of the mobile terminal B, the mobile terminal A cuts the captured video to make the aspect ratio of the resolution of the cut video be the same as the display resolution of the mobile terminal B and then sends the cut video to be the same as the mobile terminal B and then sends the cut video to the mobile terminal B.

At step S209, a local preview video is generated and displayed. The resolution of the local preview video is lower than the resolution for capturing video, and the aspect ratio of the local preview video is the same as that of the resolution for capturing video.

In the embodiment of the present disclosure, if the resolution of the video sent by the mobile terminal A is 800×600, the resolution of the local preview video can be set to 320×240.

According to the method provided by the embodiment of the present disclosure, the resolution for capturing video by local camera can be automatically matched according to the configuration of the object terminal, so as to make the resolution of the video communication be matched with the processing ability of the object terminal, to prevent the situation that the object terminal cannot perform video communication from occurring, and to reduce the power consumption and data traffic. On the other side, it is no need for the object terminal to perform single-direction drawing, compressing or cutting process on the received video so that the authenticity of the image is prevented from degrading and the user's experience is improved.

The video communication method provided by the embodiment of the present disclosure is not limited to the mobile terminals, but is suitable for other video terminal devices such as PC, notebook, multimedia TV and so on.

### Example 3

Figure 4 is an example block diagram of a video communication device according to an embodiment of the present disclosure. As shown in Fig.4, a video communication device 400 includes a configuration information obtaining unit 401 configured to obtain the configuration information of an object terminal performing the video communication.

In the embodiment of the present disclosure, if a first user using the video communication device 400 needs to make video communication with a second user using a mobile terminal B, before starting the video communication between the video communication device 400 and the mobile terminal B, the configuration information obtaining unit 401 obtains configuration information of the mobile terminal B firstly. The configuration information of the mobile terminal B may include display resolution information of the mobile terminal B and data processing ability information of the mobile terminal B.

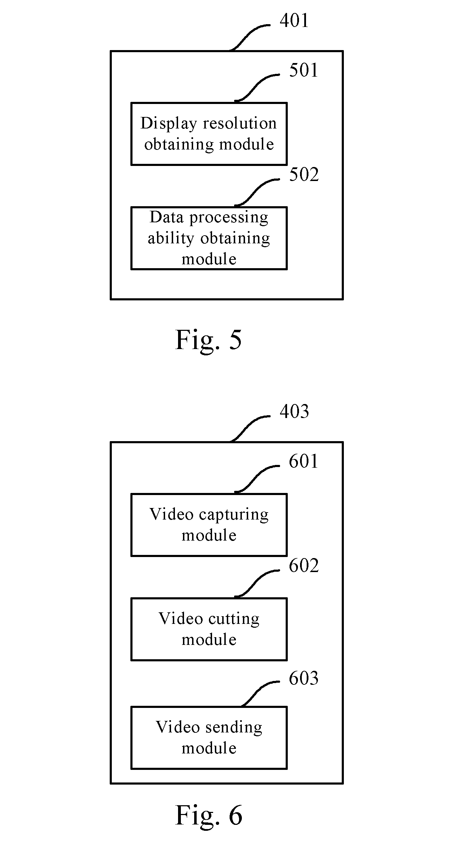

Figure 5 is an example block diagram of a configuration information obtaining unit 401 according to an embodiment of the present disclosure. As shown in Fig.5, the configuration information obtaining unit 401 includes the follows.

A display resolution obtaining module 501 which is configured to obtain the display resolution of the object terminal performing the video communication.

In the embodiment of the present disclosure, the display resolution obtaining module 501 obtains a screen resolution of the mobile terminal B and a resolution of a video conversation window of the mobile terminal B.

The display resolution obtaining module 401 also includes a data processing ability obtaining module 502 which is configured to obtain data processing ability information of the object terminal performing the video communication.

In the embodiment of the present disclosure, the data processing ability obtaining module 502 can obtain the frequency of the CPU, the size of memory, and the model of the graphic processing chip of the mobile terminal B.

The video communication device 400 also includes a resolution selecting unit 402 configured to select a corresponding camera resolution as the resolution for capturing video according to the configuration information.

In the embodiment of the present disclosure, the resolution selecting unit 402 can select a corresponding camera resolution, from the resolutions supported by its camera, as the resolution for capturing video according to the configuration information of the mobile terminal B.

In the embodiment of the present disclosure, if the configuration information is the display resolution information of the mobile terminal B, the resolution selecting unit 402 matches the resolution for capturing video by a local camera with the display resolution of the mobile terminal B. The resolution selecting unit 402 can select a corresponding camera resolution, which is the same as the display resolution of the mobile terminal B, from the resolutions supported by its camera as the resolution for capturing video. If the local camera does not support the display resolution of the mobile terminal B, the resolution selecting unit 402 may make the resolution for capturing video by the local camera be the same as the display resolution of the mobile terminal B. If the local camera does not support the aspect ratio of the display resolution of the mobile terminal B, the resolution selecting unit 402 may select a resolution, which has the minimum difference on aspect ratio from that of the display resolution of the mobile terminal B, from the resolutions supported by the local camera as the resolution for capturing video.

In the embodiment of the present disclosure, if the configuration information is the data processing ability information of the object terminal, the resolution selecting unit 402 may select corresponding camera resolution as the resolution for capturing video according to the data processing ability of the mobile terminal B. If the data processing ability of the object terminal is relatively good, the resolution selecting unit 402 may select a relatively high camera resolution as the resolution for capturing video. If the data processing ability of the mobile terminal B is relatively poor, the resolution selecting unit 402 may select a relatively low camera resolution as the resolution for capturing video.

In the embodiment of the present disclosure, the resolution selecting unit 402 can select the corresponding camera resolution as the resolution for capturing video according to both of the display resolution information and the data processing ability information of the mobile terminal B. Firstly, the resolution selecting unit 402 can select a set of appropriate camera resolutions according to the display resolution information of the mobile terminal B, and then select a camera resolution from the set of appropriate camera resolutions as the resolution for capturing video according to the data processing ability information of the mobile terminal B. In another embodiment of the present disclosure, the resolution selecting unit 402 also can select a set of appropriate camera resolutions according to the data processing ability information of the mobile terminal B, and then select a camera resolution from the set of appropriate camera resolutions as the resolution for capturing video according to the display resolution information of the mobile terminal B.

The video communication device 400 also includes a video processing unit 403 configured to capture video according to the resolution for capturing video and to send the captured video to the object terminal.

Figure 6 is an example block diagram of a video processing unit 403 according to an embodiment of the present disclosure. As shown in Fig.6, the video processing unit 403 includes a video capturing module 601 configured to capture video according to the resolution for capturing video.

In the embodiment of the present disclosure, the video capturing module 601 captures the video according to the resolution for capturing video which is selected by the resolution selecting unit 402.

The video processing unit 403 also includes a video cutting module 602 configured to cut the captured video to make the aspect ratio of the resolution of the cut video be the same as that of the display resolution of the object terminal.

In the embodiment of the present disclosure, the video processing unit 403 determines whether the resolution of the video captured by the video capturing module 601 has the same aspect ratio as that of the display resolution of the mobile terminal B. If the resolution of the video captured by the video capturing module 601 has the same aspect ratio as that of the display resolution of the mobile terminal B, the video cutting module 602 does not cut the video. If the resolution of the video captured by the video capturing module 601 has a different aspect ratio from the display resolution of the mobile terminal B, the video cutting module 602 cuts the video captured by the video capturing module 601 to make the aspect ratio of the resolution of the cut video be the same as that of the display resolution of the mobile terminal B.

The video processing unit 403 also includes a video sending module 603 configured to send the video to the object terminal.

In the embodiment of the present disclosure, if the aspect ratio of the video captured by the video capturing module 601 is the same as that of the display resolution of the mobile terminal B, the video cutting module 602 does not cut the video, and the video sending module 603 sends the video captured by the video capturing module 601 to the mobile terminal B directly. If the aspect ratio of the video captured by the video capturing module 601 is different from that of the display resolution of the mobile terminal B, the video cutting module 602 cuts the captured video to make the aspect ratio of the resolution of the cut video be the same as that of the display resolution of the mobile terminal B, and the video sending module 603 sends the cut video to the mobile terminal B.

In another embodiment of the present disclosure, the video communication device further includes a local preview unit 404 configured to generate and display a local preview video. The resolution of the local preview video is lower than the resolution for capturing video, and the aspect ratio of the local preview video is the same as that of the resolution for capturing video.

In the embodiment of the present disclosure, if the resolution of the video sent by the video sending module 603 is 800×600, the resolution of the local preview video generated by the local preview unit 404 can be set to 320×240.

According to the video communication device provided by the embodiment of the present disclosure, the resolution for capturing video by local camera can be automatically matched according to the configuration of the object terminal, so as to make the resolution of the video communication be matched with the processing ability of the object terminal, to prevent the situation that the object terminal cannot perform video communication from occurring, and to reduce the power consumption and data traffic. On the other side, it is no need for the object terminal to perform single-direction drawing, compressing or cutting process on the received video so that the authenticity of the image is prevented from degrading and the user's experience is improved.

The video communication device provided by the embodiment of the present disclosure is not only limited to the mobile terminals, and is suitable for other video terminal devices such as PC, notebook, multimedia TV and so on.

The specific embodiments as stated above further explain the objects, technical solutions and beneficial effects of the present disclosure. It should be understood that, above contents are only the specific embodiments of the present disclosure, and should not be used to limit the scope of protection of the present disclosure. Any modifications, equivalents, variations within the spirit and principle of the present disclosure should be considered as be within the scope of protection of the present disclosure.

## Claims

1. A video communication method, **characterized in that**, the method comprises:
obtaining configuration information of an object terminal in video communication;
selecting a corresponding camera resolution as a resolution for capturing video according to the configuration information;
capturing a video according to the resolution for capturing video and sending the captured video to the object terminal.

2. The video communication method of Claim 1, **characterized in that**, the step of obtaining configuration information of an object terminal in video communication comprises:
obtaining display resolution information of the object terminal.

3. The video communication method of Claim 2, **characterized in that**, the step of selecting a corresponding camera resolution as a resolution for capturing video according to the configuration information comprises:
selecting a camera resolution, which has the same aspect ratio as that of the display resolution, from the resolutions supported by a camera as the resolution for capturing video.

4. The video communication method of Claim 2, **characterized in that**, the step of selecting a corresponding camera resolution as a resolution for capturing video according to the configuration information comprises:
selecting a camera resolution, which has a minimum difference in aspect ratio from a display resolution, from the resolutions supported by a camera as the resolution for capturing video.

5. The video communication method of any one of Claims 1-4, **characterized in that**, the step of obtaining configuration information of an object terminal in video communication comprises:
obtaining data processing ability information of the object terminal.

6. The video communication method of Claim 5, **characterized in that**, the step of selecting a corresponding camera resolution as a resolution for capturing video according to the configuration information comprises:
selecting a camera resolution as the resolution for capturing video according to the data processing ability information of the object terminal.

7. The video communication method of Claim 1, **characterized in that**, the method further comprises:
generating and displaying a local preview video, the resolution of the local preview video being lower than the resolution for capturing video, and the aspect ratio of the local preview video being the same as that of the resolution for capturing video.

8. The video communication method of Claim 2, **characterized in that**, the step of capturing a video according to the resolution for capturing video and sending the captured video to the object terminal comprises:
capturing the video according to the resolution for capturing video;
cutting the captured video to make the aspect ratio of the resolution of the cut video be the same as that of the display resolution of the object terminal;
sending the cut video to the object terminal.

9. A video communication device, **characterized in that**, the device comprises:
an configuration information obtaining unit configured to obtain configuration information of an object terminal in video communication;
a resolution selecting unit configured to selecting a corresponding camera resolution as a resolution for capturing video according to the configuration information;
a video processing unit configured to capturing a video according to the resolution for capturing video and sending the captured video to the object terminal.

10. The video communication device of Claim 9, **characterized in that**, the configuration information obtaining unit comprises:
a display resolution obtaining module configured to obtain display resolution information of the object terminal;
a data processing ability obtaining module configured to obtain the data processing ability information of the object terminal.

11. The video communication device of Claim 10, **characterized in that**, the resolution selecting unit is configured to selest a camera resolution, which has the same aspect ratio as that of the display resolution, from the resolutions supported by a camera, as the resolution for capturing video.

12. The video communication device of Claim 10, **characterized in that**, the resolution selecting unit is configured for selecting a camera resolution that has a minimum difference in aspect ratio from a display resolution, from the resolutions supported by a camera, as the resolution for capturing video.

13. The video communication device of Claim 10, **characterized in that**, the resolution selecting unit is configured to select a camera resolution as the resolution for capturing video according to the data processing ability information of the object terminal.

14. The video communication device of Claim 9, **characterized in that**, the device further comprises:
a local preview unit configured to generate and display a local preview video, the resolution of the local preview video being lower than the resolution for capturing video, and the aspect ratio of the local preview video being the same as that of the resolution for capturing video.

15. The video communication device of Claim 10, **characterized in that**, the video processing unit further comprises:
a video capturing module configured to capture the video according to the resolution for capturing video;
a video cutting module configured to cut the captured video to make the aspect ratio of the resolution of the cut video be the same as that of the display resolution of the object terminal;
a video sending module configured to send the cut video to the object terminal.
